# EUROPEAN PATENT SPECIFICATION

(11) **EP 4 526 136 B1**
(45) Date of publication and mention of the grant of the patent: **28.01.2026**
(21) Application number: 23727483.2
(22) Date of filing: 12.05.2023
(51) Int. Cl.: B60G 7/02, B60G 9/00, B60G 11/46, B62D 21/02, B62D 21/11, B60G 13/00

(54) **BEARING BRACKET**
LAGERBOCK
SUPPORT DE PALIER

(30) Priority: 20.05.2022 NL 2031947
(43) Date of publication of application: 26.03.2025
(73) Proprietor: VDL Weweler B.V., 7325 WC Apeldoorn (NL)
(72) Inventor: SCHRIER, Tom, 7323 RL APELDOORN (NL); HENDRIKS, Michel, 7382 CL KLARENBEEK (NL)
(74) Representative: EP&C
(86) International application number: PCT/EP2023/062748
(87) International publication number: WO 2023/222540

(56) References cited:
- EP-A1- 3 427 980
- DE-U1- 202004 018 820
- US-A1- 2019 193 502
- US-A1- 2021 283 964
- US-B2- 6 425 593

## Description

The invention relates to a bearing bracket for mounting an axle assembly including a trailing arm to a chassis of a vehicle, preferably a commercial vehicle, for example a lorry, a trailer or a semi-trailer. The bearing bracket comprises two opposite side plates each having a top end portion adapted to be welded to a chassis beam and a mounting portion provided with a mounting hole remote from the top end in a height direction. The mounting portions of the respective side plates are parallel and spaced apart from each other in a width direction for receiving a leading end of the trailing arm therebetween for pivotally mounting the trailing arm to the bearing bracket by means of a bolt extending through the mounting holes.

An example of such a bearing bracket is disclosed in EP 1 086 836 A1. This known bearing bracket is bent in one piece from sheet metal and has two side plates and a connecting plate interconnecting the side plates at a front side thereof. The bearing bracket is open at the rear. The bearing bracket has thus a U-shaped upper edge which is welded to a chassis beam. A similar bearing bracket is disclosed in EP 2 495 117 A2.

Another bearing bracket comprising two opposite side plates each having a top end portion adapted to be welded to a chassis beam is disclosed in DE 20 2004 018 820 U1. This known bearing bracket has on each plate a front end protrusion and a rear end protrusion, curved towards the other side plate in the width direction. The front end protrusions and rear end protrusions of the side plates are positioned opposite each other, thereby forming a front side of a top end portion of the bearing bracket and a rear side of the top end portion of the bearing bracket. The front side and the rear side of the top end portion have the same width.

The present invention has for an object to provide a bearing bracket which provides a weight reduction in the vehicle and a sufficient life of the welding connection between the bearing bracket and the chassis beam.

This object is achieved by a bearing bracket according to claim 1.

The bearing bracket according to the invention has two initially separate side plates, which are welded to the chassis at the upper edge of the top end portion. The welded connection between the upper end of the bearing bracket and the chassis is the most critical part of the structure in view of the life of the structure. In particular the front side was found to be critical.

A lower tension in the weld is achieved at the front side by narrowing the front side of the upper end portion of the bearing bracket according to the invention. The lower tension in the weld extends the lifetime of the welded connection.

In addition there may be reinforcement plates welded to the chassis beam at the location of the bearing bracket, In particular, if the bearing bracket is welded to a lower flange of an I-beam, there may be additional reinforcement plates welded to the upper flange and lower flange, and possibly to the web, of the I-beam, which reinforcement plates are used to guide loads from the bearing bracket into the beam. By the presently proposed bearing bracket, the tension at the weld is reduced, whereby at least a part of the reinforcement plates on the chassis beam can be omitted.

Although the invention provides an advantage when used with reinforced I-beams, it is noted here that the bearing bracket according to the invention is not limited to use with I-beams only.

In an embodiment the top end portion of the bearing bracket has lateral sides which connect the front side and rear side, wherein said lateral sides of the top end portion of the bearing bracket converge gradually from the rear side to the front side seen in the longitudinal direction. The gradual narrowing of the top end portion of the bearing bracket towards the front avoids peak tensions in the weld that is made along the contour. Thereby the life of the weld is extended.

Preferably, the lateral sides of the top end portion of the bearing bracket have a convex outer side. However, the lateral sides of the top end portion of the bearing bracket may also be rectilinear or have a concave outer side.

In an embodiment the opposing front end protrusions and rear end protrusions are attached to each other, preferably welded together. Hereby a closed contour is created at the top end.

A closed contour as mentioned has the advantage that the side plates of the bearing bracket can be welded tot the chassis beam with a continuous weld having a closed contour. This avoids peak tensions in the weld.

In an embodiment the opposing front end protrusions abut each other, and the opposing rear end protrusions abut each other such that the top end portion of the bearing bracket has a closed contour. These abutting front end protrusions and rear end protrusions may be interconnected by welding, but this is not essential. The abutting end protrusions at least facilitate the positioning of the side plates with respect to each other.

It is noted that the opposing front end protrusions and opposing rear end protrusions do not necessarily have to be interconnected or have to abut. They may be spaced apart. However, it is preferable that a single continuous weld having a closed contour connects both side plates to the chassis.

In a practical embodiment the front end protrusions have a height in a range of from 12 to 30 mm, preferably in a range of from 15 to 25 mm, more preferably in a range of from 18 to 22 mm. It was found that if the protrusion is too high in a bearing bracket according to the invention, the stiffness of the front end of the bearing bracket is too high compared to the width of the weld at the front end, whereby the weld is subjected to too high tension loads.

In an embodiment the bearing bracket has an open front side and an open rear side seen in a longitudinal direction (X). An open front side and rear side saves material use and weight. However, also an embodiment with an interconnection between the side plates, for example at the height of the mounting portion, is also conceivable.

In a preferred embodiment the side plates are press formed sheet metal parts, preferably of steel sheet material, e.g. of S355 steel or S420 steel, preferably with a thickness of 6 mm. Usually bearing brackets which have an open front and rear side are made of 7 mm thick sheet metal. By the proposed bearing bracket according to this invention it is possible to make a bearing bracket with an open front side and open rear side of a sheet metal of only 6 mm thickness, which saves material and weight.

The use of a sheet metal plate of 6 mm to make the side plates from, instead of using 7 mm sheet metal plates reduces the strength of the weld between the side plates and the chassis beam. However, the effect of the reduced strength of the weld is compensated or at least mitigated by reducing the tensions in the weld by the bearing bracket according to the invention. Thus material can be saved, and a weight reduction can be achieved, while the life of the wheel axle suspension, in which the bearing bracket is used, is not reduced compared to known bearing brackets using 7 mm sheet metal material.

In a further embodiment, underneath the top end portion, the side plates each have a front end region which is deflected towards the other side plate, such that the bearing bracket narrows at the front end regions. This narrower front end makes the bearing bracket less stiff with respect to transverse forces (i.e. in the horizontal direction Y) applied to the bearing bracket. The reduced stiffness has the effect that the weld between the side plates and the chassis is less heavily loaded, which improves the lifespan of the weld and thus of the entire construction.

Preferably, the side plates have a deflection ridge which delimits the front end region from the rest of the side plate, wherein said deflection ridge extends from the top end portion of the side plate downwardly and to a front edge of the side plate. The ridge works as a sort of reinforcement rib, whereby the bearing becomes more rigid with respect to vertical forces applied to the bearing bracket, e.g. due to roll movements of the vehicle. This allows to make the side plates of a thinner sheet metal.

In a possible embodiment the side plates have a further deflection ridge, wherein said further deflection ridge extends from the top end portion of the side plate downwardly and to a rear edge of the side plate. The optional additional ridge also works as a reinforcement and stiffens the side plate further, whereby forces are better absorbed without deforming the side plate too much.

In a possible embodiment a flange is formed on a front side of each of the side plates, preferably at the level of the mounting portion of the side plate, said flange being bent, preferably perpendicularly with respect to the mounting portion, such that it extends towards the other side plate, which flange is adapted to mount a transverse strut to.

The invention also relates to a wheel axle suspension for a vehicle, comprising a bearing bracket according to the invention, a trailing arm having a leading end which is pivotally mounted to the bearing bracket, an axle body attached to the trailing arm, and an air spring attached to the trailing arm, which supports the vehicle chassis. The trailing arm in this air sprung wheel axle suspension may be a flexible trailing arm or spring trailing arm, which has a portion between the leading end and the axle attachment which works as a leaf spring. The trailing arm may have an integral rear end, or a rear arm portion may be mounted to the trailing arm, to provide an air spring mounting area.

In a vehicle comprising a vehicle chassis and wheel axle suspension as described in the above and mounted to said chassis, the top end portion of the bearing bracket according to the invention is welded all around on the outside with a closed contour to a chassis beam of the chassis, and preferably only on the outside.

The invention also relates to a method for manufacturing a bearing bracket as described in the above, wherein the side plates are cut from a metal sheet, and wherein the side plates are press formed. Preferably, the side plates are welded together at the top end portion.

The invention will be further elucidated in the following description with reference to the drawings, in which:
Fig. 1 shows an isometric view of an embodiment of a bearing bracket according to the invention,
Fig. 2 shows the bearing bracket of Fig. 1 in another isometric view,
Fig. 3 shows a front view of the bearing bracket of Fig. 1,
Fig. 4 shows a top view of the bearing bracket of Fig. 1,
Fig. 5 shows a side view of the bearing bracket of Fig. 1,
Fig. 6 shows a bottom view of the bearing bracket of Fig. 1,
Fig. 7 shows a rear view of the bearing bracket of Fig. 1,
Fig. 8 shows a cross section according to line A-A as indicated in Fig. 5,
Fig. 9 shows in a view in perspective one side of an air sprung wheel axle suspension including the bearing bracket of Fig. 1,
Fig. 10 shows a side view of the wheel axle suspension of Fig. 9,
Fig. 11 shows in another view in perspective the wheel axle suspension of Fig. 9,
Figs. 12A - 12C show a top elevational view of different possible closed contours of a bearing bracket according to the invention,
Fig. 13 shows a side view of another embodiment of a bearing bracket according to the invention,
Fig. 14 shows an isometric view of another embodiment of a bearing bracket according to the invention,
Fig. 15 illustrates how multiple side plates of a bearing bracket of Fig. 1 can be cut from a metal sheet.

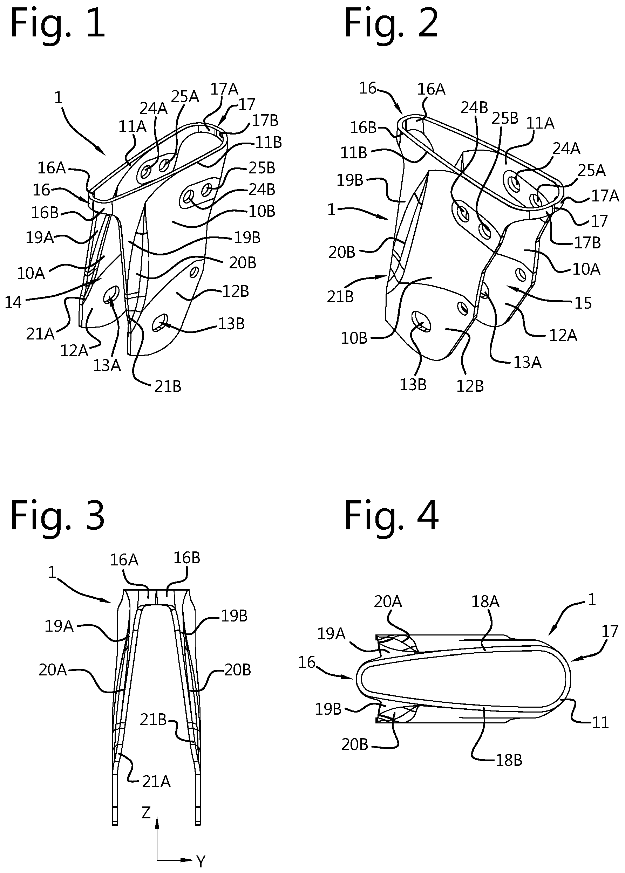

In Figs. 1-8 is shown in different views a bearing bracket 1 for mounting an axle assembly including a trailing arm to a chassis of a vehicle.

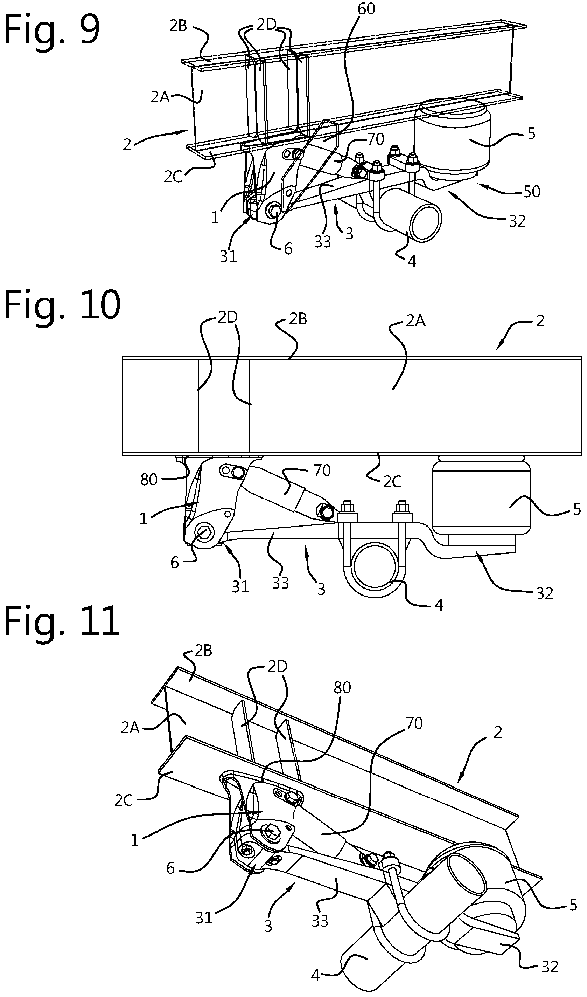

In Figs 9-11 the bearing bracket 1 is illustrated as part of a wheel axle suspension 50 mounted to a chassis beam 2 of a vehicle. This can be the wheel axle suspension of a commercial vehicle, for example a lorry, a trailer or a semi-trailer. The wheel axle suspension 50 comprises the bearing bracket 1, which is attached to the chassis beam 2, and a trailing arm 3 having a leading end 31, which is pivotally mounted to the bearing bracket 1. An axle body 4 is attached to the trailing arm 3. An air spring 5 is attached to a rear end portion 32 of the trailing arm 3. The trailing arm 3 has an integral rear end 32, but in other embodiments the trailing arm may have a separately made rear arm portion that is mounted to the trailing arm, to provide an air spring mounting area. The air spring 5 supports the chassis beam 2 and thus the chassis. The trailing arm 3 in the illustrated air sprung wheel axle suspension 50 is a flexible trailing arm or spring trailing arm, which has a spring portion 33 between the leading end 31 and the axle attachment which is formed and works as a leaf spring.

The bearing bracket 1 comprises two opposite side plates 10A and 10B. In the embodiment shown in the figures, the side plates 10A, 10B are press formed sheet metal parts, preferably of steel sheet material, e.g. of S355 steel or S420 steel. The sheet material of the side plates 10A, 10B preferably has a thickness of 6 mm.

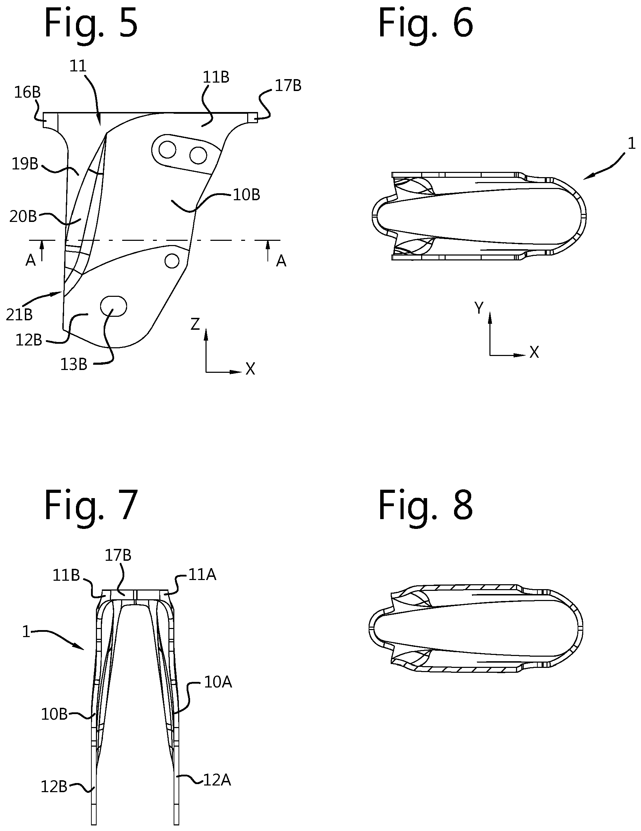

The two opposite side plates 10A and 10B each have a top end portion 11A, 11B adapted to be welded to the chassis beam 2 and a mounting portion 12A, 12B provided with a mounting hole 13A, 13B remote from the top end 11A, 11B in a height direction Z (see Fig. 5). The mounting portions 12A, 12B of the respective side plates 10A, 10B are parallel and spaced apart from each other in a width direction Y. The distance between the mounting portions 12A and 12B is such that the leading end 31 of the trailing arm 3 can be received therebetween for pivotally mounting the trailing arm 3 to the bearing bracket 1 by means of a bolt 6 extending through the mounting holes 12A, 12B.

The leading end 31 of the trailing arm 3 may have an eyelet or similar structure. A metal bushing surrounded by an elastic layer, e.g. a rubber layer is arranged in the eyelet. The rubber layer may be vulcanized on the metal bushing. By inserting the bolt 6 through the holes 13A, 13B and the metal bushing, which is aligned with said holes 13A, 13B, and by tightening the bolt 6, the head ends of the metal bushing are clamped against the inner side of the mounting portions 12A and 12B of the bearing bracket 1. The metal bushing is thus fixed with respect to the bearing bracket 1. The rubber layer allows a pivoting movement of the leading end 31 of the trailing arm around a pivot axis, defined by the fixed metal bushing. As such, a sort of bearing is created between the leading end 31 of the trailing arm 3 and the bearing bracket 1.

The bearing bracket 1 has an open front side 14 and an open rear side 15 seen in a longitudinal direction X as is indicated in Figs. 1 and 2.

The side plates 10A and 10B also have holes 24A, 24B and 25A, 25B for mounting a shock absorber 70, which is shown in Figs 9-11.

The top end portion 11A of the side plate 10A has a curved front end protrusion 16A. The top end portion 11B of the side plate 10B has a curved front end protrusion 16B. The front end protrusions 16A and 16B are curved towards each other in the width direction Y, such that the front end protrusions 16A and 16B oppose each other and preferably abut each other.

The top end portion 11A of the side plate 10A has a curved rear end protrusion 17A. The top end portion 11B of the side plate 10B has a curved rear end protrusion 17B. The rear end protrusions 17A and 17B are curved towards each other in the width direction Y, such that the rear end protrusions 17A and 17B oppose each other and preferably abut each other.

The curved protrusions 16A, 16B and 17A, 17B have an axis of curvature that extends perpendicular to the XY plane, which XY plane is defined by the longitudinal direction X and the width direction Y.

In a practical embodiment the curved front end protrusions 16A, 16B may have a radius of curvature (with respect to the corresponding axis of curvature) of about 22 mm and the curved rear end protrusions 17A, 17B may have a radius of curvature (with respect to the corresponding axis of curvature) of about 40 mm. The ratio between the front end radius of curvature and the rear end radius of curvature is in such an embodiment about 0,55, which has proven to be preferable. However, the mentioned ratio should at least be within a range from 0,30 to 0,75.

The distance between the mounting portions 12A and 12B is larger than the largest width of the top end portion 11 of the bearing bracket 1, as is best visible in Figs 1, 4 and 6.

The top end portion 11 of the bearing bracket 1 has a closed contour, wherein the front end protrusions 16A,16B and the rear end protrusions 17A, 17B are attached to each other. Preferably the front end protrusions 16A and 16B are welded together and the rear end protrusions 17A and 17B are welded together. The front end protrusions 16A and 16B form a front side 16 of said closed contour and the rear end protrusions 17A and 17B form a rear side 17 of said closed contour, wherein the rear side 17 is wider than the front side 16 as can be best seen in Fig. 4.

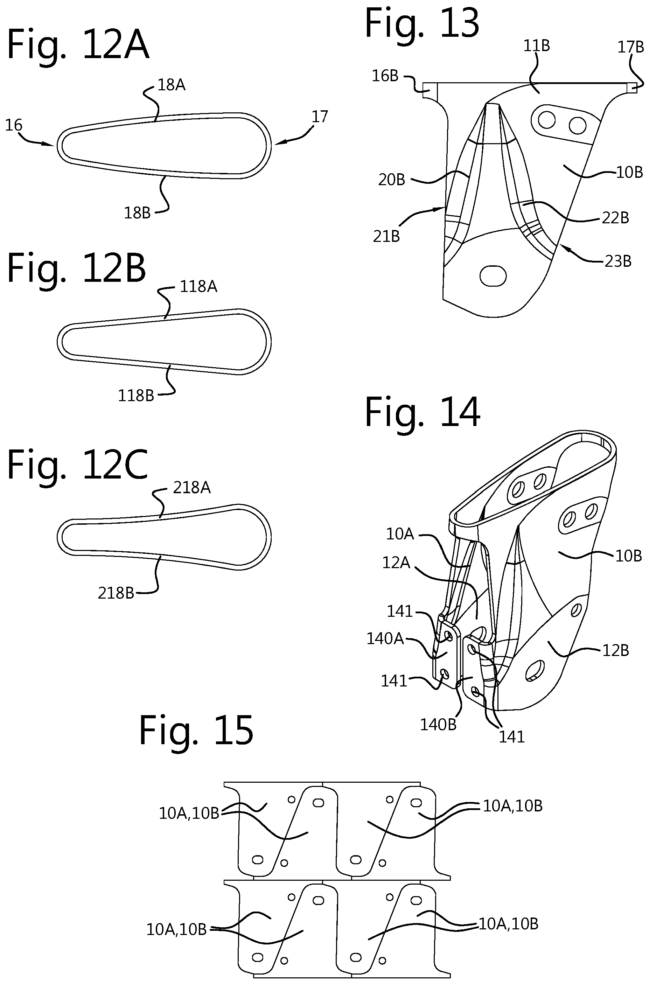

The closed contour of the top end portion 11 has lateral sides 18A, 18B which connect the front side 16 and rear side 17, as can be seen in Fig. 4. The lateral sides 18A and 18B of the closed contour converge gradually from the rear side 17 to the front side 16 seen in the longitudinal direction X. In Fig. 12A only the closed contour of the top end portion 11 of the bearing bracket 1 is shown, which corresponds to the closed contour shown in Fig. 4. The lateral sides 18A and 18B of this closed contour have a slightly convex outer side.

In another embodiment, the closed contour has lateral sides 118A, 118B which are rectilinear as is illustrated in Fig. 12B.

In yet another embodiment, the closed contour has lateral sides 218A, 218B which have a concave outer side, as is illustrated in Fig. 12C.

Underneath the top end portion 11A, 11B, the side plates 10A, 10B each have a front end region 19A, 19B which is deflected towards the other side plate. The bearing bracket 1 thus narrows at the front end regions 19A, 19B. The side plates 10A, 10B have a deflection ridge 20A, 20B which delimits the front end region 19A, 19B from the rest of the side plate 10A, 10B. The deflection ridge 20A, 20B extends from the top end portion 11A, 11B downwardly and to a front edge 21A, 21B of the side plate 10A, 10B. The orientation of the deflection ridges 20A and 20B results in that the bearing bracket narrows from the mounting portions 12A, 12B towards the front and towards the upper side of the bracket. The narrowing bearing bracket 1 at the front end regions 19A, 19B has a beneficial effect on the reduction of tension in the welded connection between the chassis beam 2 and the bearing bracket and thus on the life of the weld 80.

Furthermore the front end regions 19A and 19B may be more upright (i.e. more vertically orientated) than the region behind the ridge 20A, 20B which has a decreasing effect on the rigidity in the transverse direction at the front end regions 19A and 19B. This reduces the tension in the welded connection.

In another embodiment, illustrated in Fig. 13, the side plate 10B is shown. The side plate 10B has a further deflection ridge 22B. The further deflection ridge 22B extends from the top end portion 11B downwardly and to a rear edge 23B of the side plate 10B. The opposite side plate has the same features.

The top end portion 11 of the bearing bracket 1, which is formed by the two interconnected top end portions 11A, 11B of the side plates 10A and 10B, is welded all around on the outside of the closed contour to the chassis beam 2 of the chassis (cf. Figs 10 and 11). A single continuous weld 80 having a closed contour connects both side plates 10A, 10B to the chassis beam 2. Preferably a weld 80 is only applied on the outside of the closed contour. A weld on the inner side of the closed contour may thus be omitted which makes the production easier and at lower cost. It is noted that in the embodiments shown in the figures the top end portion 11 of the bearing bracket 1 has a closed contour, and thus the weld 80 which is made along said closed contour also has a closed contour. However, there is also an embodiment possible within the scope of the invention, in which the top end portions 11A, 11B of the side plates 10A, 10B do not abut. This embodiment has a gap between the ends of the opposing front end protrusions 16A, 16B and/or opposing rear end protrusions 17A, 17B. In such an embodiment it is preferable though that both side plates are welded to the chassis beam 2 with a common single weld which has a closed contour, wherein the weld thus bridges the gap. Preferably a weld is only provided on the outside of the top end portion 11 of the bearing bracket.

The chassis beam 2 has a web 2A and an upper flange 2B and a lower flange 2C. As is best seen in Figs 9 and 11, the chassis beam 2 is provided with reinforcement plates 2D which extend on either side of the web 2A between the upper flange 2A and the lower flange 2B and are welded to the web 2A and the flanges 2B, 2C. In the drawing four reinforcement plates 2D are shown. The application of a bearing bracket according to the present invention, allows to omit the reinforcing plates 2D on one side of the web 2A, because the bearing bracket 1 according to the invention is smaller in width than known bearing brackets and induces lower tensions in the structure. The omission of part of the reinforcement plates 2D reduces use of material and saves weight of the vehicle.

In the example of Figs 9-11 the chassis beam 2 is an I-beam having a central web 2A and an upper flange 2B and lower flange 2C. It is noted here that the bearing bracket according to the invention is not limited to use with an I-beam and also other chassis beams can be used, for example a rectangular hollow section beam or a U-shaped beam.

In Fig. 9 a transverse strut 60 is illustrated in dashed lines. The transverse strut 60 is attached with one end thereof to the inner side plate of the bearing bracket 1 and the other end is attached to another chassis part, e.g. a chassis beam. The attachment between the strut 60 and the side plate is not shown in detail but is preferably positioned such that the centre axis of the strut 60 intersects the centre axis of the pivot bolt 6.

The side plates 10A and 10B are cut from a metal sheet. Fig. 15 illustrates how the side plates can be cut from a flat metal sheet, such that the loss of material is as low as possible. The initially flat side plates 10A and 10B are press formed by arranging the flat cut side plates in a forming press to provide them with the 3-dimensional shape as is described in the above and shown in the Figures 1-7.

Fig. 14 shows a bearing bracket 1 which is similar to the bearing bracket 1 of Fig.1, but which has on a front side of each of the side plates 10A, 10B a flange 140A, 140B at the level of the mounting portion 12A, 12B of the side plate 10A, 10B. The flange 140 is preferably bent perpendicularly with respect to the mounting portion 12A, 12B, such that it extends towards the other side plate. The flanges 140A and 140B have mounting holes 141 formed in them, whereby they are adapted to mount a transverse strut to. A transverse strut thus mounted to the front side of the bearing bracket 1 facilitates the bearing bracket 1 to absorb transverse forces.

## Claims

1. Bearing bracket (1) for mounting an axle assembly including a trailing arm (3) to a chassis of a vehicle, preferably a commercial vehicle, for example a lorry, a trailer or a semi-trailer, wherein the bearing bracket (1) comprises two opposite side plates (10A, 10B) each having a top end portion (11A, 11B) adapted to be welded to a chassis beam (2) and a mounting portion (12A, 12B) provided with a mounting hole (13A, 13B) remote from the top end portion in a height direction (Z), wherein the mounting portions (12A, 12B) of the respective side plates (10A, 10B) are parallel and spaced apart from each other in a width direction (Y) for receiving a leading end (31) of the trailing arm (3) therebetween for pivotally mounting the trailing arm (3) to the bearing bracket (1) by means of a bolt (6) extending through the mounting holes (13A, 13B), wherein the top end portion (11A, 11B) of each side plate (10A, 10B) has a curved front end protrusion (16A, 16B) and a curved rear end protrusion (17A, 17B), which front end protrusion (16A, 16B) and rear end protrusion (17A, 17B) are curved towards the other side plate (10A, 10B) in the width direction (Y), wherein the front end protrusions (16A, 16B) of the respective side plates (10A, 10B) are positioned opposite each other and form a front side (16) of a top end portion (11) of the bearing bracket (1) and the rear end protrusions (17A, 17B) of the respective side plates (10A, 10B) are positioned opposite each other and form a rear side (17) of the top end portion (11) of the bearing bracket (1), **characterized in that** said rear side (17) is wider than said front side (16).

2. Bearing bracket according to claim 1, wherein the top end portion (11) of the bearing bracket (11) has lateral sides (18A, 18B; 118A, 118B; 218A, 218B) which connect the front side (16) and rear side (17), wherein said lateral sides (18A, 18B; 118A, 118B; 218A, 218B) of the top end portion (11) of the bearing bracket (1) converge gradually from the rear side (17) to the front side (16) seen in the longitudinal direction (X).

3. Bearing bracket according to claim 2, wherein:
- the lateral sides (18A, 18B) of the top end portion (11) of the bearing bracket (1) have a convex outer side; or
- the lateral sides (118A, 118B) of the top end portion (11) of the bearing bracket (1) are rectilinear; or
- the lateral sides (218A, 218B) of the top end portion (11) of the bearing bracket (1) have a concave outer side.

4. Bearing bracket according to any of the preceding claims, wherein the opposing front end protrusions (16A, 16B) and rear end protrusions (17A, 17B) are attached to each other, preferably welded together.

5. Bearing bracket according to any of the preceding claims, wherein said opposing front end protrusions (16A, 16B) abut each other and said opposing rear end protrusions (17A, 17B) abut each other such that the top end portion (11) of the bearing bracket (1) has a closed contour.

6. Bearing bracket according to any of the preceding claims, wherein the bearing bracket (1) has an open front side (14) and an open rear side (15) seen in a longitudinal direction (X).

7. Bearing bracket according to any of the preceding claims, wherein the side plates (10A, 10B) are press formed sheet metal parts, preferably of steel sheet material, preferably with a thickness of 6 mm.

8. Bearing bracket according to any of the preceding claims, wherein, underneath the top end portion (11A, 11B), the side plates (10A, 10B) each have a front end region (19A, 19B) which is deflected in an inclined orientation towards the other side plate (10A, 10B), such that the bearing bracket (1) narrows at the front end regions (19A, 19B).

9. Bearing bracket according to claim 8, wherein the side plates (10A, 10B) have a deflection ridge (20A, 20B) which delimits the front end region (19A, 19B) from the rest of the side plate (10A, 10B), wherein said deflection ridge (20A, 20B) extends from the top end portion (11A, 11B) of the side plate (10A, 10B) downwardly and to a front edge (21A, 21B) of the side plate (10A, 10B).

10. Bearing bracket according to claim 9, wherein the side plates (10A, 10B) have a further deflection ridge (22B), wherein said further deflection ridge (22B) extends from the top end portion of the side plate downwardly and to a rear edge (23B) of the side plate.

11. Bearing bracket according to any of the preceding claims, wherein on a front side of each of the side plates (10A, 10B) a flange (140A, 140B) is formed, preferably at the level of the mounting portion (12A, 12B) of the side plate (10A, 10B), said flange (140A, 140B) being bent, preferably perpendicularly with respect to the mounting portion (12A, 12B), such that it extends towards the other side plate, which flange (140A, 140B) is adapted to mount a transverse strut to.

12. Wheel axle suspension (50) for a vehicle, comprising a bearing bracket (1) according to any of the preceding claims, a trailing arm (3) having a leading end (31) which is pivotally mounted to the bearing bracket (1), an axle body (4) attached to the trailing arm (3), and an air spring (5) attached to the trailing arm (3), which supports the vehicle chassis.

13. Vehicle comprising a vehicle chassis and a wheel axle suspension (50) according to claim 12 mounted to said chassis, wherein the top end portion (11) of the bearing bracket (1) is welded all around on the outside with a closed contour to a chassis beam (2) of the chassis, and preferably only on the outside.

14. Method for manufacturing a bearing bracket (1) according to any of the claims 1-11, wherein the side plates (10A, 10B) are cut from a metal sheet, and wherein the side plates (10A, 10B) are press formed.

15. Method according to claim 14, wherein the side plates (10A, 10B) are welded together at the top end portion (11A, 11B) thereof.

## Patentansprüche

1. Lagerbock (1) zum Montieren einer Achsanordnung, die einen Längslenker (3) umfasst, an einem Fahrgestell eines Fahrzeugs, vorzugsweise eines Nutzfahrzeugs, zum Beispiel eines Lastkraftwagens, eines Anhängers oder eines Sattelanhängers, wobei der Lagerbock (1) zwei einander gegenüberliegende Seitenplatten (10A, 10B) umfasst, die jeweils einen oberen Endabschnitt (11A, 11B), der dazu ausgelegt ist, an einen Fahrgestellträger (2) geschweißt zu werden, und einen Montageabschnitt (12A, 12B), der mit einer Montagebohrung (13A, 13B) entfernt von dem oberen Endabschnitt in einer Höhenrichtung (Z) versehen ist, umfasst, wobei die Montageabschnitte (12A, 12B) der jeweiligen Seitenplatten (10A, 10B) parallel und in einer Breitenrichtung (Y) voneinander beabstandet sind, um ein vorderes Ende (31) des Längslenkers (3) dazwischen aufzunehmen, um den Längslenker (3) mittels eines Bolzens (6), der sich durch die Montagebohrungen (13A, 13B) erstreckt, schwenkbar am Lagerbock (1) zu befestigen, wobei der obere Endabschnitt (11A, 11B) jeder Seitenplatte (10A, 10B) einen gekrümmten vorderen Endvorsprung (16A, 16B) und einen gekrümmten hinteren Endvorsprung (17A, 17B) aufweist, wobei der vordere Endvorsprung (16A, 16B) und der hintere Endvorsprung (17A, 17B) in der Breitenrichtung (Y) zu der anderen Seitenplatte (10A, 10B) hin gekrümmt sind, wobei die vorderen Endvorsprünge (16A, 16B) der jeweiligen Seitenplatten (10A, 10B) einander gegenüberliegend positioniert sind und eine Vorderseite (16) eines oberen Endabschnitts (11) des Lagerbocks (1) bilden und die hinteren Endvorsprünge (17A, 17B) der jeweiligen Seitenplatten (10A, 10B) einander gegenüberliegend positioniert sind und eine Rückseite (17) des oberen Endabschnitts (11) des Lagerbocks (1) bilden, **dadurch gekennzeichnet, dass** die Rückseite (17) breiter als die Vorderseite (16) ist.

2. Lagerbock nach Anspruch 1, wobei der obere Endabschnitt (11) des Lagerbocks (11) laterale Seiten (18A, 18B; 118A, 118B; 218A, 218B) aufweist, die die Vorderseite (16) und die Rückseite (17) verbinden, wobei die lateralen Seiten (18A, 18B; 118A, 118B; 218A, 218B) des oberen Endabschnitts (11) des Lagerbocks (1), in der Längsrichtung (X) gesehen, allmählich von der Rückseite (17) zur Vorderseite (16) zusammenlaufen.

3. Lagerbock nach Anspruch 2, wobei:
- die lateralen Seiten (18A, 18B) des oberen Endabschnitts (11) des Lagerbocks (1) eine konvexe Außenseite aufweisen; oder
- die lateralen Seiten (118A, 118B) des oberen Endabschnitts (11) des Lagerbocks (1) geradlinig sind; oder
- die lateralen Seiten (218A, 218B) des oberen Endabschnitts (11) des Lagerbocks (1) eine konkave Außenseite aufweisen.

4. Lagerbock nach einem der vorhergehenden Ansprüche, wobei die einander gegenüberliegenden vorderen Endvorsprünge (16A, 16B) und hinteren Endvorsprünge (17A, 17B) aneinander befestigt, vorzugsweise miteinander verschweißt sind.

5. Lagerbock nach einem der vorhergehenden Ansprüche, wobei die einander gegenüberliegenden vorderen Endvorsprünge (16A, 16B) aneinander anliegen und die einander gegenüberliegenden hinteren Endvorsprünge (17A, 17B) aneinander anliegen, sodass der obere Endabschnitt (11) des Lagerbocks (1) eine geschlossene Kontur aufweist.

6. Lagerbock nach einem der vorhergehenden Ansprüche, wobei der Lagerbock (1) in einer Längsrichtung (X) gesehen eine offene Vorderseite (14) und eine offene Rückseite (15) aufweist.

7. Lagerbock nach einem der vorhergehenden Ansprüche, wobei die Seitenplatten (10A, 10B) pressgeformte Blechteile sind, vorzugsweise aus Stahlblechmaterial, vorzugsweise mit einer Dicke von 6 mm.

8. Lagerbock nach einem der vorhergehenden Ansprüche, wobei die Seitenplatten (10A, 10B) unterhalb des oberen Endabschnitts (11A, 11B) jeweils einen vorderen Endbereich (19A, 19B) aufweisen, der in einer geneigten Ausrichtung zu der anderen Seitenplatte (10A, 10B) hin abgelenkt ist, sodass sich der Lagerbock (1) an den vorderen Endbereichen (19A, 19B) verjüngt.

9. Lagerbock nach Anspruch 8, wobei die Seitenplatten (10A, 10B) einen Ablenkgrat (20A, 20B) aufweisen, der den vorderen Endbereich (19A, 19B) von dem Rest der Seitenplatte (10A, 10B) abgrenzt, wobei sich der Ablenkgrat (20A, 20B) von dem oberen Endbereich (11A, 11B) der Seitenplatte (10A, 10B) nach unten und zu einer Vorderkante (21A, 21B) der Seitenplatte (10A, 10B) erstreckt.

10. Lagerbock nach Anspruch 9, wobei die Seitenplatten (10A, 10B) einen weiteren Ablenkgrat (22B) aufweisen, wobei sich der weitere Ablenkgrat (22B) von dem oberen Endabschnitt der Seitenplatte nach unten und zu einer hinteren Kante (23B) der Seitenplatte erstreckt.

11. Lagerbock nach einem der vorhergehenden Ansprüche, wobei an einer Vorderseite jeder der Seitenplatten (10A, 10B) ein Flansch (140A, 140B) gebildet ist, vorzugsweise auf der Höhe des Montageabschnitts (12A, 12B) der Seitenplatte (10A, 10B), wobei der Flansch (140A, 140B) gebogen ist, vorzugsweise senkrecht in Bezug auf den Montageabschnitt (12A, 12B), sodass er sich zu der anderen Seitenplatte erstreckt, wobei der Flansch (140A, 140B) dazu angepasst ist, eine Querstrebe daran zu montieren.

12. Radachsaufhängung (50) für ein Fahrzeug, umfassend einen Lagerbock (1) nach einem der vorhergehenden Ansprüche, einen Längslenker (3) mit einem vorderen Ende (31), das schwenkbar an dem Lagerbock (1) montiert ist, einen Achskörper (4), der an dem Längslenker (3) befestigt ist, und eine Luftfeder (5), die an dem Längslenker (3) befestigt ist, die das Fahrgestell des Fahrzeugs stützt.

13. Fahrzeug, umfassend ein Fahrzeugfahrgestell und eine an diesem montierte Radachsaufhängung (50) nach Anspruch 12, wobei der obere Endabschnitt (11) des Lagerbocks (1) außenseitig mit geschlossener Kontur mit einem Fahrgestellträger (2) des Fahrgestells, vorzugsweise nur außenseitig, umlaufend verschweißt ist.

14. Verfahren zum Herstellen eines Lagerbocks (1) nach einem der Ansprüche 1-11, wobei die Seitenplatten (10A, 10B) aus einem Metallblech geschnitten werden und wobei die Seitenplatten (10A, 10B) pressgeformt werden.

15. Verfahren nach Anspruch 14, wobei die Seitenplatten (10A, 10B) an ihrem oberen Endabschnitt (11 A, 11B) miteinander verschweißt werden.

## Revendications

1. Support de palier (1) destiné à monter un ensemble essieu comprenant un bras arrière (3) sur un châssis de véhicule, de préférence un véhicule commercial, par exemple un camion, une remorque ou une semi-remorque, le support de palier (1) comprenant deux plaques latérales (10A, 10B) opposées ayant chacune une partie d'extrémité supérieure (11A, 11B) conçue pour être soudée à une poutre de châssis (2) et une partie de montage (12A, 12B) pourvue d'un trou de montage (13A, 13B) à distance de la partie d'extrémité supérieure dans le sens de la hauteur (Z), les parties de montage (12A, 12B) des plaques latérales (10A, 10B) respectives étant parallèles et espacées l'une de l'autre dans le sens de la largeur (Y) pour recevoir une extrémité avant (31) du bras arrière (3) entre elles pour monter pivotant le bras arrière (3) sur le support de palier (1) au moyen d'un boulon (6) s'étendant à travers des trous de montage (13A, 13B), la partie d'extrémité supérieure (11A, 11B) de chaque plaque latérale (10A, 10B) présentant une saillie d'extrémité avant incurvée (16A, 16B) et une saillie d'extrémité arrière incurvée (17A, 17B), lesquelles saillie d'extrémité avant (16A, 16B) et saillie d'extrémité arrière (17A, 17B) étant incurvées vers l'autre plaque latérale (10A, 10B) dans le sens de la largeur (Y), les saillies d'extrémité avant (16A, 16B) des plaques latérales (10A, 10B) respectives étant positionnées en face l'une de l'autre et formant un côté avant (16) d'une partie d'extrémité supérieure (11) du palier de support (1) et les saillies d'extrémité arrière (17A, 17B) des plaques latérales (10A, 10B) respectives étant positionnées en face l'une de l'autre et formant un côté arrière (17) de la partie d'extrémité supérieure (11) de l'étrier de support (1), **caractérisé en ce que** ledit côté arrière (17) est plus large que ledit côté avant (16).

2. Support de palier selon la revendication 1, la partie d'extrémité supérieure (11) du support de palier (11) présentant des côtés latéraux (18A, 18B ; 118A, 118B ; 218A, 218B) qui relient le côté avant (16) et le côté arrière (17), lesdits côtés latéraux (18A, 18B ; 118A, 118B ; 218A, 218B) de la partie d'extrémité supérieure (11) du support de palier (1) convergeant progressivement du côté arrière (17) vers le côté avant (16) comme il est vu dans le sens de la longueur (X).

3. Support de palier selon la revendication 2,
- les côtés latéraux (18A, 18B) de la partie d'extrémité supérieure (11) du support de palier (1) présentant un côté extérieur convexe ; ou
- les côtés latéraux (118A, 118B) de la partie d'extrémité supérieure (11) du support de palier (1) étant rectilignes ; ou
- les côtés latéraux (218A, 218B) de la partie d'extrémité supérieure (11) du support de palier (1) présentant un côté extérieur concave.

4. Support de palier selon l'une quelconque des revendications précédentes, les saillies d'extrémité avant (16A, 16B) et les saillies d'extrémité arrière (17A, 17B) opposées étant fixées l'une à l'autre, de préférence soudées l'une à l'autre.

5. Support de palier selon l'une quelconque des revendications précédentes, lesdites saillies d'extrémité avant (16A, 16B) opposées venant en butée l'une contre l'autre et lesdites saillies d'extrémité arrière (17A, 17B) opposées venant en butée l'une contre l'autre de sorte que la partie d'extrémité supérieure (11) du support de palier (1) ait un contour fermé.

6. Support de palier selon l'une quelconque des revendications précédentes, le support de palier (1) présentant un côté avant ouvert (14) et un côté arrière ouvert (15) comme il est vu dans le sens de la longueur (X).

7. Support de palier selon l'une quelconque des revendications précédentes, les plaques latérales (10A, 10B) étant des pièces en tôle formées à la presse, de préférence en tôle d'acier, de préférence d'une épaisseur de 6 mm.

8. Support de palier selon l'une quelconque des revendications précédentes, sous la partie d'extrémité supérieure (11A, 11B), les plaques latérales (10A, 10B) présentant chacune une région d'extrémité avant (19A, 19B) qui est déviée dans une orientation inclinée vers l'autre plaque latérale (10A, 10B), de sorte que le support de palier (1) se rétrécisse au niveau des régions d'extrémité avant (19A, 19B).

9. Support de palier selon la revendication 8, les plaques latérales (10A, 10B) présentant une arête de déviation (20A, 20B) qui délimite la région d'extrémité avant (19A, 19B) depuis le reste de la plaque latérale (10A, 10B), ladite arête de déviation (20A, 20B) s'étendant depuis la partie d'extrémité supérieure (11A, 11B) de la plaque latérale (10A, 10B) vers le bas et vers un bord avant (21A, 21B) de la plaque latérale (10A, 10B).

10. Support de palier selon la revendication 9, les plaques latérales (10A, 10B) présentant une autre arête de déviation (22B), ladite autre arête de déviation (22B) s'étendant depuis la partie d'extrémité supérieure de la plaque latérale vers le bas et jusqu'à un bord arrière (23B) de la plaque latérale.

11. Support de palier selon l'une quelconque des revendications précédentes, sur un côté avant de chacune des plaques latérales (10A, 10B) étant formée une bride (140A, 140B), de préférence au niveau de la partie de montage (12A, 12B) de la plaque latérale (10A, 10B), ladite bride (140A, 140B) étant coudée, de préférence perpendiculairement à la partie de montage (12A, 12B), de sorte qu'elle s'étende vers l'autre plaque latérale, laquelle bride (140A, 140B) étant conçue pour qu'une entretoise transversale soit montée sur elle.

12. Suspension d'essieu de roue (50) pour véhicule, comprenant un support de palier (1) selon l'une quelconque des revendications précédentes, un bras arrière (3) présentant une extrémité avant (31) qui est montée pivotante sur le support de palier (1), un corps d'essieu (4) fixé sur le bras arrière (3), et un ressort pneumatique (5) fixé sur le bras arrière (3), qui supporte le châssis de véhicule.

13. Véhicule comprenant un châssis de véhicule et une suspension d'essieu de roue (50) selon la revendication 12 montée sur ledit châssis, la partie d'extrémité supérieure (11) du support de palier (1) étant soudée tout autour à l'extérieur avec un contour fermé sur une poutre de châssis (2) du châssis, et de préférence seulement à l'extérieur.

14. Procédé de fabrication d'un support de palier (1) selon l'une quelconque des revendications 1 à 11, les plaques latérales (10A, 10B) étant découpées dans une feuille métallique, et les plaques latérales (10A, 10B) étant formées à la presse.

15. Procédé selon la revendication 14, les plaques latérales (10A, 10B) étant soudées ensemble au niveau de leur partie d'extrémité supérieure (11A, 11B).
